**Europäisches Patentamt**

**European Patent Office**

**Office européen des brevets**

(19)

(11) Veröffentlichungsnummer : **0 442 902 B1**

(12) **EUROPÄISCHE PATENTSCHRIFT**

(45) Veröffentlichungstag der Patentschrift :
**23.12.92 Patentblatt 92/52**

(51) Int. Cl.$^5$ : **B09B 5/00**

(21) Anmeldenummer : **89911798.0**

(22) Anmeldetag : **06.10.89**

(86) Internationale Anmeldenummer :
**PCT/EP89/01172**

(87) Internationale Veröffentlichungsnummer :
**WO 90/04470 03.05.90 Gazette 90/10**

(54) **VORRICHTUNG UND VERFAHREN ZUR BEHANDLUNG KONTAMINIERTEN BODENS.**

(30) Priorität : **29.10.88 DE 3836899**

(43) Veröffentlichungstag der Anmeldung :
**28.08.91 Patentblatt 91/35**

(45) Bekanntmachung des Hinweises auf die
Patenterteilung :
**23.12.92 Patentblatt 92/52**

(84) Benannte Vertragsstaaten :
**AT BE CH DE FR GB IT LI LU NL SE**

(56) Entgegenhaltungen :
**EP-A- 0 155 022**
**EP-A- 0 253 079**

(73) Patentinhaber : **O & K ORENSTEIN & KOPPEL AG**
**Brunsbütteler Damm 144-208**
**W-1000 Berlin 20 (DE)**

(72) Erfinder : **KREFT, Wilfried**
**Kirschweg 12**
**W-4722 Ennigerloh (DE)**
Erfinder : **GROTHAUS, Franz-Josef**
**Am Rhoder Stein 21**
**W-5960 Olpe (DE)**

EP 0 442 902 B1

Jouve, 18, rue Saint-Denis, 75001 PARIS

**Beschreibung**

Die Erfindung betrifft ein Verfahren zur Aufarbeitung kontaminierter Böden und ähnlicher Materialien, insbesondere von Kokereistandorten, durch Abtragung, Dekontaminierung und ggf. Wiederauffüllung der Entnahmestelle mit aereinigtem Boden, dergestalt, daß der abgetragene Boden in einer von Heißgasen durchströmten Mühle getrocknet und zerkleinert, das Feststoff-/ Gasgemisch einem Zyklonabscheider zugeführt und dort in gasförmige und feste Bestandteile getrennt wird, daß die Feststoffe bei hoher Temperatur thermisch behandelt, anschließend abgekühlt und ggf. zur Wiederauffüllung der Entnahmestelle eingesetzt werden und daß die Abgase zumindest teilweise nach Durchführung eines Kühl- und eines Filtervorganges an die Atmosphäre abgegeben werden.

Es ist bekannt, zur Entsorgung von Ablagerungen in Flüssen, diese auszubaggern und das Material nach Durchführung einer aus einer Zerkleinerung im Brecher und einem Siebvorgang bestehenden Voraufbereitung einer Drehrohrofenanlage zuzuführen. Die Drehrohrofenanlage besteht aus zwei hintereinander geschalteten Drehrohrtrommeln, deren erste als Trockentrommel zur Vortrocknung des Materials arbeitet. Der im Materialstrom sich anschließende zweite Drehrohrofen ist mit einer offenen Flamme befeuert, welche direkt auf den zu reinigenden Feststoff bei Temperaturen zwischen 400° C und 800° C einwirkt. Aus dem Drehrohrofen wird der gereinigte Boden entnommen und wieder an der Entnahmestelle eingebaut.

Die in der Drehrohrofenanlage gebildeten begase werden nach Abtrennung der enthaltenen Staubanteile in einer Brennkammer mit separatem Brenner auf etwa 1200° C aufgeheizt und hiermit entgiftet. Nach anschließender Abkühlung und Filterung werden die gereinigten Abgase an die Atmosphäre abgegeben. Ein Teil der Abgase wird der Drehrohrtrocknungstrommel zur Intensivierung des Trocknungsvorganges und zur Verbesserung der Energiebilanz zugeleitet. Nachteilig ist bei dem bekannten Verfahren festzustellen, daß durch die Voraufbereitung durch Brechen und Sieben nicht ausreichend kleine Korngrößen des kontaminierten Materiales erzeugt werden können, so daß der anschließende Trocknungsverfahrensschritt uneffektiv ist.

Im anschließenden Verfahrensschritt der direkten Beaufschlagung des Feststoffes durch eine Flamme im Drehrohrofen ist ebenfalls nachteilig, daß eine gleichmäßige Temperaturbeaufschlagung nicht erfolgt, vielmehr Kaltgassträhnennildungen auftreten, die zu unbehandelten Feststoffs trähnen im Austragsgut führen, welches damit nur ungenügend gereinigt wird. Schließlich reichen die in einer Drehrohrofenanlage erzielten Temperaturen nicht aus, sämtliche Schadstoffe zu zersetzen, so daß auch der so gereinigte Boden neuzeitlichen Anforderungen des Umweltschutzes nicht mehr entspricht. Ebenfalls ist die im Teilstrom hinter dem zweiten Brenner vorgesehene Rückführung von gereinigter heißer Abluft zur Trocknungstrommel energietechnisch ungünstig.

Durch die DE-OS 36 23 939 sind ein Verfahren und eine danach arbeitende Vorrichtung zur Aufarbeitung von kontaminierten Böden und ähnlichen Materialien durch Abtragung, Dekontaminierung und Wiederauffüllung der Entnahmestelle mit gereinigtem Boden vorbekannt, wobei das abgetragene Material ggf. nach einer Voraufbereitung getrocknet und anschließend mit hoher Temperatur thermisch behandelt wird. Die Trocknung wird in einer von Heißgasen durchströmten Mühle mit einer Zerkleinerung des Materials auf ein Kornband von 0 bis 10 mm kombiniert, derart, daß ein wesentlicher Teil der Schadstoffe in die Gasphase überführt wird. Nach der Trocknung wird das Material gemeinsam mit der Gasphase in Form einer Feststoff-/Gasdispersion in einer brennerbestückten Aufheiz- und Dekontaminationsstrecke mit einer Temperatur im Bereich von 800° C bis 1200° C behandelt und anschließend in einer Zyklonabscheiderstufe von der sämtliche Schadstoffe enthaltenden Gasphase getrennt, welche im Kreislauf mit dem Brenner zur vollständigen Zersetzung der Schadstoffe geführt wird. Ein Teilstrom der Verbrennungsgase wird der kombinierten Trocknungs- und Zerkleinerungsstufe zugeführt, wobei der gereinigte Feststoff nach einer Kühlung ausgetragen wird, deren Kühlluft dem Brenner als vorgewärmte Primärluft zuführbar ist.

Die Nachteile des aufgezeigten St. d. T. sind im wesentlichen darin begründet, daß die Schaltung der Anlagenkomponenten lediglich eine Brenntemperatur bezogen auf Feststoff von max. 800° C zuläßt. Es werden Feststoffverweilzeiten in der Dekontaminationsstrecke von lediglich 2 sec. erreicht. Diese verhältnismäßig kurze Durchlaufzeit reicht jedoch nur aus, ein Kornband <3 mm bei einer Temperatur von 800° C dergestalt zu dekontaminieren, daß die leicht flüchtigen Bestandteile aus dem Feststoff herausgetrennt werden können. Bei Korngrößen oberhalb 3 mm kann es sogar vorkommen, daß keine genügend große Durchheizung bei dieser kurzen Durchlaufzeit realisiert werden kann, um selbst die leicht flüchtigen Bestandteile aus dem Feststoff zu entfernen Aromatische Kohlenwasserstoffe, aliphatische Kohlenwasserstoffe, Cyanide, leicht flüchtige Schermetalle, PCBs sowie CKW können bei dieser kurzen Durchlaufzeit und diesen Temperaturen nicht beseitigt werden..

Ferner nachteilig ist, daß der heiße Gaskreislauf zwischen Dekontamination und Brenner den eingesetzten Ventilator belastet. Darüberhinaus wird der Brenner durch die hohe Staubbelastung in den abgeschiedenen Gasen ebenfalls belastet, wobei der daraus resultierende Anteil des zu entsorgenden Filterstaubes das Verfahren verteuert.

Ausgehend von der DE-OS 36 23 939 liegt der Erfindung die Aufgabe zugrunde, ein Verfahren sowie eine Vorrichtung zur Aufarbeitung kontaminierter Böden und ähnlicher Materialien gemäß dem gattungsbildenden Teil des ersten Patentanspruches dahingehend weiterzubilden, daß eine Entkoppelung der Stromführung ohne Kreisgasfahrweise zwischen der Dekontaminationsstrecke und der Brennkammer vorgesehen wird. Um die Flexibilität, d.h. die Freiheitsgrade der Brennanlage in der weise zu erhöhen, daß u.a. auch Stoffe wie leicht flüchtige Schwermetalle, PCBs, CKW und dgl. thermisch zerstört werden können, ist eine Modifizierung der.Brennanlage anzustreben. Ferner soll eine möglichst staubarme Atmosphäre in der gesamten Anlage realisiert werden, um so Schmelsphasen-bildung und Verstopfungen im Brennraum zu unterbinden.

Diese Aufgabe wird verfahrensgemäß dadurch gelöst, daß die festen Bestandteile im Anschluß an die Dekontamination in eine als Durchlaufbereich ausgebildete Verweilzone eingebracht und dort bei Temperaturen, die im wesentlichen der Dekontaminationstemperatur entsprechen, nachbehandelt und anschließend in den Bereich der Kühlstrecke übergeführt werden, und daß die Abgase aus der Mahltrocknung und/oder Dekontamination einer thermischen Nachverbrennung unterzogen werden.

Verfahrensgemäße Weiterbildungen der Erfindung sind den Unteransprüchen 2 bis 11 zu entnehmen. Durch die verfahrensgemäßen Merkmale kann eine thermischen Behandlung von Böden, die mit organischen Schadstoffen, insbesondere aliphatischen und aromatischen Kohlenwasserstoffen, polycyclischen aromatischen Kohlenwasserstoffen, Phenolverbindungen und Derivaten, Cyanidverbindungen und halogen-organischen Verbindungen sowie leicht flüchtigen Schwermetallverbindungen und gleichartiger Abfallstoffe problemlos durchgeführt werden, da durch Einfügung einer Verweilzone die Verweilzeit bis in den Minutenbereich verlängert werden kann. Die Einstellung der Verweilzeit wird hierbei in Abhängigkeit von dem Kontaminationsgrad der Böden bzw. Abfallstoffe geregelt. Im Gegensatz zum St. d. T. entfällt der Gaskreislauf zwischen Dekontamination und Brenner durch die Änderung der Gasstromführung. Die dem Brenner zugeführten Gase werden vorher entstaubt. Der anfallende Filterstaub wird zumindest teilweise in den Bereich der Dekontamination zurückgeführt.

Im Vergleich zu den Drehrohrofenverfahren werden durch das erfindungsgemäße Verfahren ein geringerer Energieverbrauch, geringere Investitionskosten sowie eine kompaktere Bauweise erzielt. Im Vergleich zur DE-OS 36 23 939 werden einerseits eine bessere Reinigungswirkung sowohl der Feststoffe als auch der Abgase und andererseits eine geringere Störanfälligkeit erzielt.

Die erfindungsgemäße Vorrichtung zur Aufbereitung kontaminierter Böden und ähnlicher Materialien durch Abtragung, Dekontaminierung und ggf. Wiederauffüllung der Entnahmestelle mit gereinigtem Boden ist gekennzeichnet durch eine als Durchlaufeinrichtung für die dekontaminierten Materialien ausgebildete Verweilzone, die im Anschluß an die Dekontaminationsstrecke vorgesehen ist, sowie eine Einrichtung zur thermischen Nachverbrennung der Abgase aus der Mahltrocknung und/oder der Dekontaminationsstrecke. Vorteil- hafte Weiterbildungen der vorrichtungsgemäßen Merkmale der Erfindung sind den Ansprüchen 12 bis 20 zu entnehmen.

Durch Ausbildung der Verweilzone als mehrstufiger Zyklonapparat lassen sich Feststoffverweilzeiten von ca. 1 min. erreichen. Eine Wirbelschicht kann Feststoffverweilzeiten von einigen Minuten realisieren. Die Auslegung erfolgt vorzugsweise so, daß die feineren Teilchen pneumatisch ausgetragen und die groben Teilchen - nur diese benötigen zusätzliche Verweilzeit - im Fließbett verweilen.

Die Mühle wird mit einer Heißgastemperatur von max. 700° C beaufschlagt, wobei das zu reinigende Material in Abhängigkeit von seiner Eingangsfeuchte am Mühlenausgang eine Temperatur von etwa 100° C bis 300° C aufweist. Die Feststoff-/Gasdispersion wird einem Zyklonabscheider zugeführt, der die Feststoffe von den gasförmigen Bestandteilen trennt. Das der Dekontaminationsstrecke aufgegebene Feststoffgemisch wird auf 800°C bis 1100° C erhitzt und anschließend in einem weiteren Zyklonabscheider nochmals von den gasförmigen Bestandteilen getrennt. Die teil-dekontaminierten Feststoffe werden in die erfindungsgemäße Verweilzone eingebracht, wo sie in Abhängigkeit vom Grad der Kontamination zwischen 5 sec. und 10 min. bewegt werden, damit keine Anbackungen auftreten. Wie bereits angesprochen besteht die Verweilzone aus einer mehrstufigen Zyklonapparatur bzw. einem Wirbelschicht/ Fließbett. Beiden Typen gemeinsam ist eine wärmedichte Abschirmung gegen die Umgebung, um einen Temperaturabfall zu vermeiden. Nach Durchlauf durch die Verweilzone werden die Feststoffe in üblicher Form der Kühleinrichtung zugeführt und dort auf eine Temperatur zwischen 100° C und 150° C abgekühlt. Der gereinigte Boden kann zwischengelagert oder aber unmittelbar in den Entnahmebereich wieder eingebaut werden. Für die Gasführung bieten sich die in den Patentansprüchen beschriebenen Varianten an, die in Abhängigkeit von den zu dekontaminierenden Materialien bzw. unter Kostengesichtspunkten zu wählen sind. Bei Einsatz von Wärmetauschern kann die hier anfallende Energie beispielsweise zur Dampferzeugung, zur Stromerzeugung oder für Fernwärmezwecke genutzt werden. Darüberhinaus besteht die Möglichkeit, diese Energie dem oder den Brennern und-/oder der Mühle zur Verfügung zu stellen, um so die Wärmebilanz der Gesamtanlage zu verbessern.

In Abhängigkeit des Kontaminationsgrades des zu reinigenden Materiales kann es sinnvoll sein, auf der Abgasseite Maßnahmen zur Rauchgasentstickung und/oder der Rauchgasentschwefelung zu treffen. Diese Maßnahmen können beispielsweise so aussehen, daß nach der Rauchgasentstaubung ein Aktivkohlefilter für eine Abscheidung von Schwermetallverbindungen geschaltet wird. Die in der Rauchgasentstaubung anfallenden Filterstäube können vollständig der Dekontamination zugeführt werden. Eine Staubentsorgung an dieser Stelle wird damit überflüssig.

Die Erfindung ist anhand von Ausführungsbeispielen in der Zeichnung dargestellt und wird wie folgt beschrieben. Es zeigen:

Fig. 1 bis 3 - unterschiedliche Fließschemata der erfindungsgemäßen Vorrichtung zur Aufarbeitung von kontaminierten Böden

Fig. 4 und 5 - verschiedene Ausbildungen von Verweilzonen.

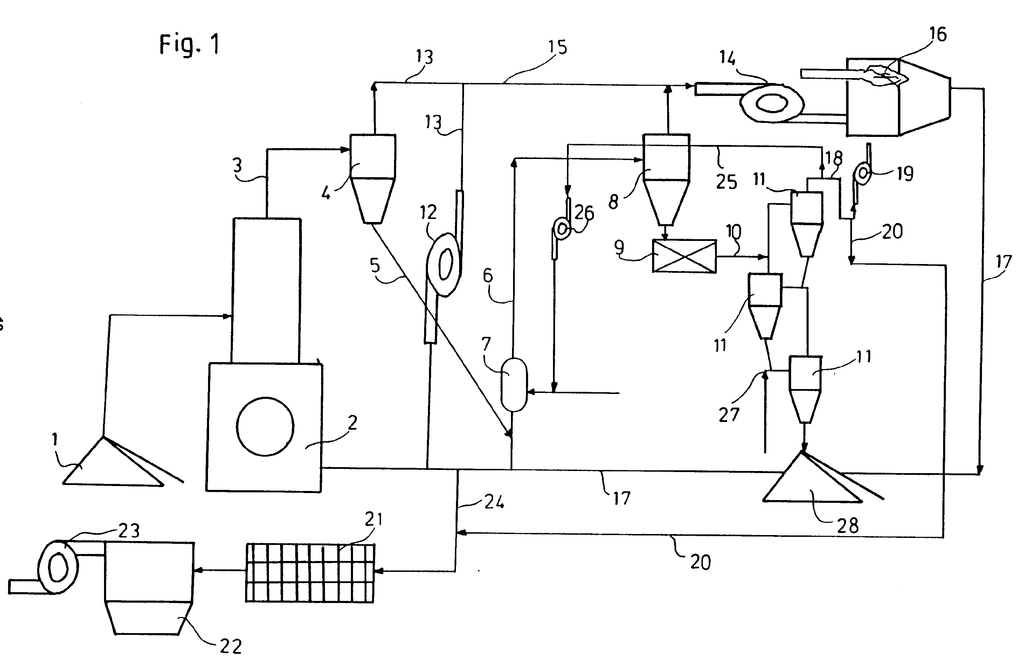

Die Anlage gemäß Fig. 1 ist im wesentlichen aus folgenden Vorrichtungsteilen aufgebaut:

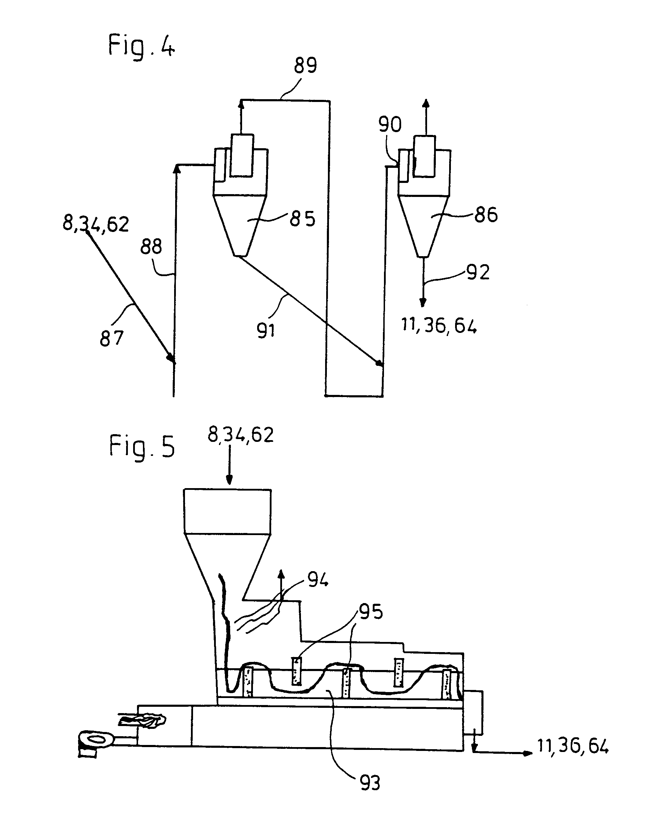

Die zu entgiftenden Böden werden vorgebrochen und aufgehaldet 1 (Grobzerkleinerung). Über nicht weiter dargestellte Ladeeinheiten (Bagger, Förderbänder oder dgl.) werden die Grobfraktionen einer von Heißgasen durchströmten Mühle 2 zugeführt, die über eine Rohrleitung 3 mit einem Zyklonabscheider 4 verbunden ist. Aus diesem gelangt der Feststoff über eine Rohrleitung 5 in eine Aufheiz- und Dekontaminationsstrecke 6, die in Form eines Brennschachtes oder dgl. ausgebildet sein kann. Im Bereich der Dekontaminationsstrecke 6 kann bei Bedarf weiterer Brennstoff und Luft zugeführt werden 7. Bei der dort stattfindenden flammenlosen Verbrennung wird die freigesetzte Energie spontan in Erwärmungsarbeit umgesetzt, d.h. eine Überhitzung der Gasphase wird vermieden. An die Aufheiz- und Dekontaminationsstrecke 6 schließt sich ein weiterer Zyklonabscheider 8 an, in welchem die gereinigten Feststoffe von der Gasphase getrennt werden. Die Feststoffe, d.h. der teil-dekontaminierte Boden, wird anschliessend in eine Verweilzone 9 übergeleitet, die hier im Fließbild lediglich als Blackbox dargestellt ist. Verschiedene Arten von Verweilzonen sind den Fig. 4 und 5 zu entnehmen. Die Verweilzone 9 ist zu dem Zweck als Durchlaufeinrichtung ausgebildet, so daß Anbackungen des Materiales vermieden werden. Infolge der verlängerten Verweilzeit der Feststoffe, die in Abhängigkeit vom Kontaminationsgrad bis in den Minutenbereich erhöht werden kann, kann bei entsprechender Temperatur sichergestellt werden, daß auch problembehaftete Schadstoffe wie leicht flüchtige Schwermetallverbindungen, PCBs und CKW aus den Materialien herausgetrennt werden können. Nach Durchlauf der Verweilzone 9 fließen die Feststoffe über eine weitere Rohrleitung 10 einer dreistufigen Kühlung zu. Die drei Kühlstufen werden durch nachgeschaltete Zyklonabscheiderstufen 11 gebildet.

Der Feststoffmassenstrom verläßt das Kühlsystem über nicht weiter dargestellte Austragseinrichtungen mit einer Temperatur, die zwischen 100° C und 150° C liegt.

Eine erste verunreinigte Gasphase liegt beim Zyklonabscheider 4 vor. Mittels eines Ventilators 12 wird die Gasphase des Zyklonabscheiders 4 über eine Rohrleitung 13 zumindest teilweise der Mühle 2 als Heißgas wieder zur Verfügung gestellt. Die verbleibende Gasphase der Zyklonabscheider 4,8 wird über eine Strahlpumpe 14 sowie einer Rohrleitung 15 einem nachgeschalteten Brenner 16 zugeführt und dort thermisch nachverbrannt, wobei hier eine vollständige Zersetzung aller Schadstoffe erreicht wird. Über eine Rohrleitung 17 werden die Rauchgase aus der thermischen Nachverbrennung der Mühle 2 als Heißgase zur Verfügung gestellt, wobei hier eine Vermischung mit den kälteren Abgasen der durch den Ventilator 12 abgezogenen Gasphase aus dem Zyklonabscheider 4 durchgeführt wird. Durch Vermischen der Gasströme aus den Rohrleitungen 13 und 17 ergibt sich etwa eine Eingangstemperatur an der Mühle 2 von max. 700° C. Abgase aus der Kühlstufe 11 werden dem Brenner 16 über eine Leitung 18 und ein Gebläse 19 als Sekundärluft zur Verfügung gestellt. Die nicht dem Brenner 16 zur Verfügung gestellte Gasphase wird über eine Leitung 20 einem Wärmetauscher 21 zugeführt. Hier findet eine Kühlung der Abgase statt, die dann über einen Filter 22 sowie einen Ventilator 23 an die Atmosphäre abgegeben werden. Über den Wärmetauscher 21 kann fernerhin eine nicht weiter dargestellte Energierückgewinnung vollzogen werden, dergestalt, daß die Wärmeenergie aus der Nachverbrennungsstrecke 17 über eine weitere Rohrleitung 24 energetisch genutzt wird (z.B. Abhitzekessel, Dampferzeugung, Erzeugung von elektrischem Strom und/oder Fernwärme). Die erwärmte Luft aus dem Wärmetauscher 21 kann auch als Verbrennungsluft für den Brenner 16 bzw. als Energieeintrag für die Mühle 2 genutzt werden. Ein weiterer nicht dem Brenner 16 zur Verfügung gestellter Teil der Gasphase aus der Kühlstufe 11 wird über eine Leitung 25 und einen Ventilator 26 als vorgewärmte Luft in den Bereich der zusätzlichen Brennstoffzufuhr geleitet. Bei 27 wird die nötige Kühlluft der mehrstufigen Kühlvorrichtung 11 aus der Atmosphäre angesaugt und wie bereits angesprochen zwecks Energierückgewinnung nach Durchlaufen der Kühlvorrichtung zumindest teilweise in den Bereich 7 der Dekontaminationsstrecke 6 zurückgeführt.

Die beschriebene Anlage arbeitet wie folgt:

In der Mühle 2 werden die kontaminierten Böden gleichzeitig durch einen Heißgasstrom von max. 700° C getrocknet und auf ein Kornband von 0 bis 3 mm zerkleinert. Durch die Zerkleinerung des Feststoffes auf Korngrößen <3 mm bei gleichzeitiger Temperaturbeaufschlagung wird ein Durchheizen des Feststoffes in vollem Umfange gewährleistet. Die Ausgangstemperatur des Feststoffes am Ausgang 27 der Mühle 2 beträgt in Abhängigkeit von der Eingangsfeuchte ca. 100° C bis 300° C. Durch dieses Aufheizen wird bereits ein erheblicher Schadstoffgehalt in die Gasphase übergeführt. Das zerkleinerte Material wird als Feststoff-/Gasdispersion aus der Mühle 2 ausgetragen und unter der Wirkung des Ventilators 12 dem Zyklonabscheider 4 zugeführt. Das dort abgetrennte Gas gelangt teilweise als Heißgas zur Mühle 2 zurück und wird zum anderen Teil über die Strahlpumpe 14 dem Brenner 16 zur thermischen Nachverbrennung zugeführt. Der dort vollständige getrocknete Feststoff wird der Aufheiz- und Dekontaminationsstrecke 6 übergeben und dort etwa mit 800° C bis 1100° C thermisch behandelt, welche Temperatur ausreicht, um bei einer Durchlaufzeit von etwa 2-3 sec. eine erste Verdampfung herbeizuführen, durch welche die leicht flüchtigen Bestandteile, wie z.B. Lösemittel, BTX-Aromaten oder dgl. aus dem Feststoff herausgetrennt werden können. Die Abtrennung des vorgereinigten Feststoffes wird in der Zyklonabscheiderstufe 8 vorgenommen, wobei die Gasphase über die Strahlpumpe 14 dem Brenner 16 zugeführt wird. Der vorgereinigte Feststoff gelangt nun in die Verweilzone 9, wo er in Abhängigkeit vom Kontaminationsgrad bis in den Minutenbereich bewegt wird. Die Verweilzone 9 weist eine wärmedichte Abschirmung gegen die Umgebung auf, um einen Temperaturabfall zu vermeiden. Infolge der Erhöhung der Verweilzeit bei etwa gleicher Temperatur wie in der Dekontaminationsstrecke 6 (800°C bis 1100° C) können nun u.a. auch die problembehafteten Schadstoffe wie leicht flüchtige Schwermetalle, PCBs und PAKs aus dem Feststoff ausgedampft werden. Aus der Verweilzone 9 gelangt der nun vollständig gereinigte Boden über die Kühlstufe 11 und eine nicht weiter dargestellte Austragseinrichtung beispielsweise auf eine Halde 28.

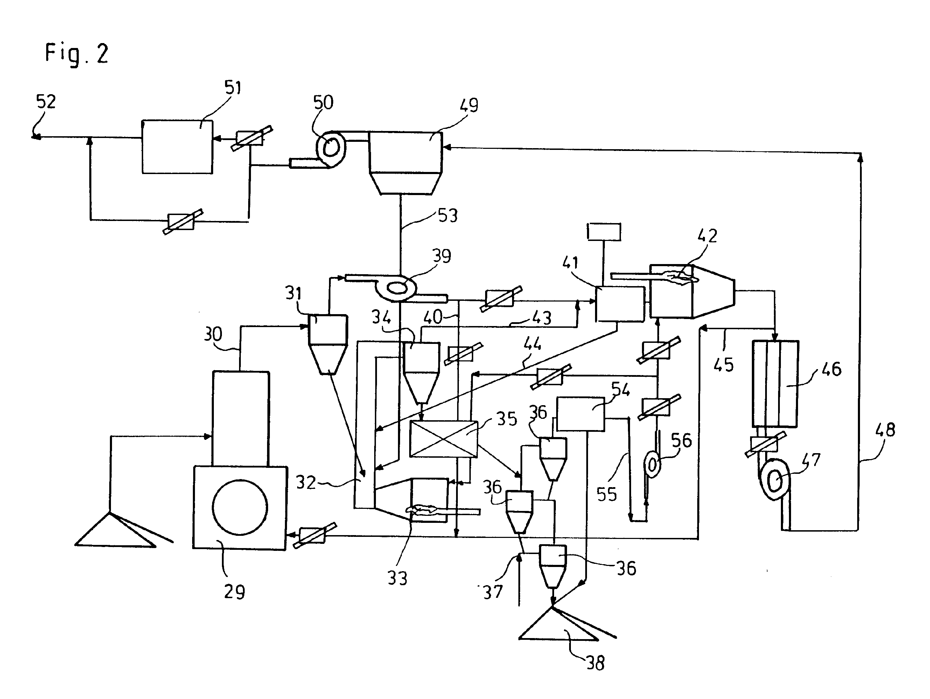

Fig. 2 zeigt eine weitere Alternative der erfindungsgemäßen Vorrichtung. Diese Anlage ist im wesentlichen aus folgenden Vorrichtungsteilen aufgebaut:

Das bereits vorgebrochene Material wird wie bereits in Fig. 1 beschrieben einer von Heißgasen durchströmten Mühle 29 zugeführt, wo es einerseits getrocknet und andererseits auf Fraktionen< 3 mm gebracht wird. Über eine Rohrleitung 30 wird die Feststoff-/Gasdispersion einem Zyklonabscheider 31 zugeführt, von wo aus der Feststoff in den Bereich der Dekontaminationsstrecke 32 gebracht wird. Hier ist ein Brenner 33 vorgesehen, der das entsprechende Temperaturniveau (800° C bis 1100° C) in der Dekontaminationsstrecke 32 erzeugt. Die Dekontaminationsstrecke 32 ist vorzugsweise als Brennschacht ausgebildet. Wie bereits in Fig. 1 angesprochen, wird hier während des Materialdurchlaufes eine erste Dekontamination vorgenommen. Der vorgereinigte Feststoff gelangt dann in einen Zyklonabscheider 34, wo eine nochmalige Trennung des Feststoffes von der Gasphase durchgeführt wird. Der gereinigte Feststoff wird nun einer ebenfalls als Blackbox dargestellten Verweilzone 35 übergeben, die in den Fig. 4 und 5 weiter beschrieben ist. Auch hier werden die Temperaturen, die in der Dekontaminationsstrecke 32 erzeugt worden sind, im wesentlichen beibehalten, so daß in Abhängigkeit des Kontaminationsgrades des Materiales die Verweilzeit vom Sekunden- bis in den Minutenbereich variiert werden kann. Der so gereinigte Feststoff gelangt nun in eine mehrstufige Kühlvorrichtung 36, wobei die Kühlluft aus der Atmosphäre an der Stelle 37 in das System eingebracht wird. Der gereinigte Feststoff wird über nicht weiter dargestellte Austragseinrichtungen auf eine Halde 38 gebracht. Die Abgas- und Rückstandsführung stellt sich wie folgt dar:

Das Feststoffgasgemisch aus der Mahltrocknung 29 wird über einen Ventilator 39 angesaugt und zumindest teilweise über eine Rohrleitung 40 der Mühle 29 als Heißgas wieder zur Verfügung gestellt. Der nicht der Mühle 29 zur Verfügung gestellte Gasanteil gelangt über einen Entstauber 41 zu einem Brenner 42, wo eine thermische Nachverbrennung stattfindet. Gleiches gilt für die Gasphase aus dem Zyklonabscheider 34, die über eine Leitung 43 ebenfalls dem Entstauber 41 zugeführt und im Brenner 42 nachverbrannt wird. Der hierbei entstehende Staubanteil, der ggf. hochbelastet sein kann, wird zumindest teilweise in die Dekontaminationsstrecke 32 über eine Rohrleitung 44 zurückgeführt. Die aus der thermischen Nachverbrennung resultierenden Rauchgase, die etwa eine Ausgangstemperatur von 1200° C aufweisen, werden getrennt. Über eine Rohrleitung 45 wird ein Teil der Rauchgase mit den Abgasen aus der Zyklonabscheidung 31 vermischt und der Mühle 29 als Heißgas zur Verfügung gestellt. Die am Mühleneingang vorhandene Heißgastemperatur beläuft sich auf max. 700° C. Der nicht der Mühle 29 zur Verfügung gestellte Rauchgasanteil gelangt über einen Gaskühler 46, einen weiteren Ventilator 47 sowie die Leitung 48 in einen Filter 49, von wo die gereinigten Abgase über einen Ventilator 50 einem Filter für Schwermetalle 51 dem Kamin 52 zugeleitet werden. Die Stäube aus dem Filter 49 werden über eine Leitung 53 unmittelbar in die Dekontaminationsstrecke 32 aufgegeben. Der Kühlstufe 36 ist ebenfalls ein Entstauber 54 zugeordnet, wobei die hier anfallenden noch staubförmigen Bestandteile unmittelbar auf die Halde 38 aufgegeben werden, da hier keine Belastung mehr vorliegt. Die gasförmigen Bestandteile, die die Kühlstufe 36 verlassen, werden über eine Leitung 55 und einen Ventilator 56 dem Brenner 42 als Sekundärluft zugeführt.

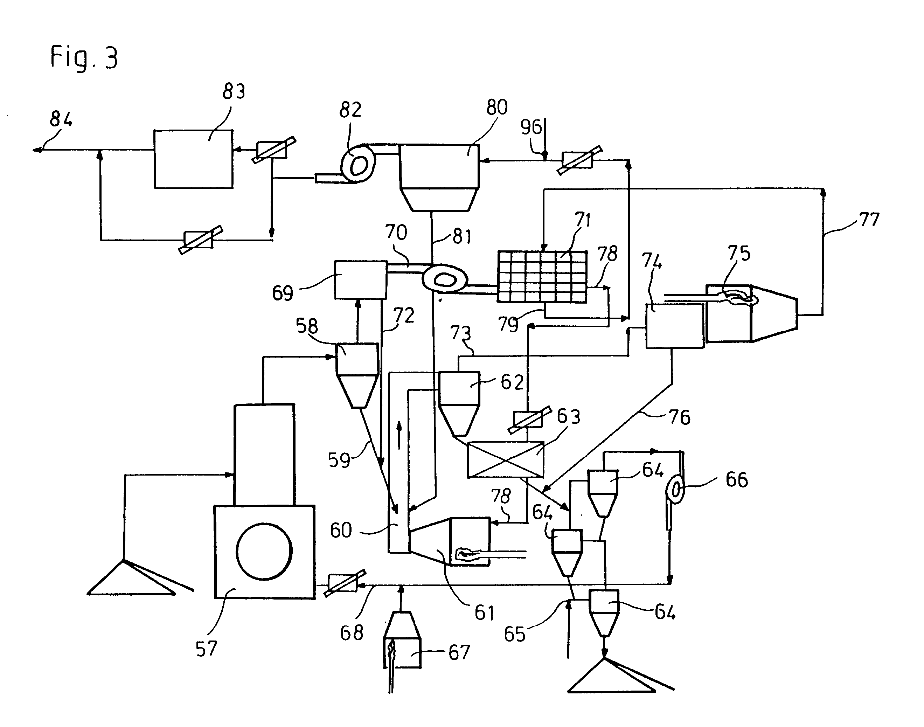

Fig. 3 zeigt eine weitere Alternative. Wie bereits in den vorangegangenen Figuren beschrieben, wird auch hier das vorbereitete Material einer von Heißgas durchströmten Mühle 57 zugeführt, wo eine Fraktion< 3 mm erzeugt wird. Das so vorgetrocknete Gemisch wird einem Zyklonabscheider 58 zugeführt, der die feste von der gasförmigen Phase trennt. Die Feststoffe gelangen über eine Leitung 59 in den Bereich der Dekontaminationsstrecke 60, die über eine Brenner 61 aufgeheizt wird (800° C bis 1100° C). In dieser Dekontaminationsstrecke werden die leicht flüchtigen Schadstoffe infolge der relativ kurzen Verweilzeit (ca. 2-3 sec.) ausgedampft. Das Gemisch gelangt anschließend in eine Zyklonabscheider 62, wo eine weitere Abrennung der festen von der gasförmigen Phase vollzogen wird. Die fest Phase gelangt wie bereits in den Fig. 1 und 2 besprochen in eine, auch hier nur als Blackbox dargestellte Verweilzone 63, wobei im wesentlichen bei gleicher Temperatur wie in der Dekontaminationsstrecke 60 in Abhängigkeit vom Kontaminationsgrad auch die problembehafteten Schadstoffe entfernt werden können. Im Anschluß an die Verweilzone 63 werden die nunmehr gereinigten Feststoffe in eine mehrstufige Kühlvorrichtung 64 eingebracht, wo sie von einer Eingangstemperatur von etwa 800° C bis 1100° C auf ca. 100° C bis 150° C heruntergekühlt werden. Die dazu benötigte Kühlluft wird an der Stelle 65 aus der Atmosphäre entnommen und nach Durchlauf der Kühlstufe 64 über einen Ventilator 66 der Mühle 57 als Heißgas zur Verfügung gestellt. Sollte der Energieaustrag aus der Kühlstufe 64 nicht ausreichen, umd eine voll- ständige Trocknung in der Mühle 57 zu gewährleisten, so kann ein weiterer Heißgaserzeuger 67 in die Heißgasleitung 68 zugeschaltet werden. Die im Zyklon 58 abgeschiedene Gasphase wird über einen Filter 69 sowie einen Ventilator 70 einem Wärmetauscher 71 zugeführt. Anfallende Filterstäube aus dem Filter 69 werden über eine Leitung 72 in die Leitung 59 aufgegeben und so unmittelbar in die Dekontaminationsstrecke 60 eingebracht. Die im Zyklon 62 abgeschiedene Gasphase wird über eine weitere Leitung 73 ebenfalls einem Entstauber 74 zugeführt und anschließend in einem Brenner 75 thermisch nachverbrannt. Anfallende Stäube, die an dieser Stelle keine Belastungen mehr aufweisen, werden über eine Leitung 76 unmittelbar in den Bereich des Kühlers 64 aufgegeben. Die aus der Mahltrocknung stammenden Abgase, die über den Filter 69 dem Wärmetauscher 71 zugeführt worden sind, werden durch die Rauchgase aus der thermischen Nachverbrennung, die etwa ein Temperaturniveau von 1200° C aufweisen, mittels einer Leitung 77 aufgeheizt und nach Passieren des Wärmetauschers 71 über eine weitere Leitung 78 dem Brenner 61 als Primärluft zur Verfügung gestellt. Die Abgase aus der thermischen Nachverbrennung werden über eine Abgasleitung 79 einem Filter 80 zugeführt, wobei vor Eintritt in den Filter eine Kühlung der Abgase 96 mittels Luft und/oder Wasser vollzogen wird. Der im Filter 80 anfallende Filterstaub wird über eine Leitung 81 in den Bereich der Dekontaminationsstrecke 60 zurückgeführt. Das so gereinigte Abgas wird über einen Ventilator 82 ggf. noch über einen Filter für Schwermetalle 83 geführt und anschließend in den Kamin 84 aufgegeben.

In den Fig. 4 und 5 sind Verweilzonen dargestellt (wie sie in den Fig. 1 bis 3 als Blackbox 9,35,63 angesprochen worden sind).

Fig. 4 zeigt eine Verweilzone, die als mehrstufige Zykloneinrichtung 85,86 ausgebildet ist. Die aus den Zyklonen 8,34,62 abgegebenen Feststoffe gelangen über Rohrleitung 87,88 in den ersten Zyklon 85, wo eine erste Abrennung zwischen fester und gasförmiger Phase stattfindet. Die gasförmige Phase wird über eine Leitung 89 unmittelbar in den Eingangsbereich 90 des nachgeschalteten zweiten Zyklones 86 geführt. Die Feststoffe werden über eine weitere Leitung 91 ebenfalls in den Bereich 90 der zweiten Zyklonstufe 86 geführt, wobei hier eine nochmalige Trennung der Phasen vollzogen wird. Im Bereich 92 wird der so gereinigte Feststoff in den Bereich der jeweiligen Kühlstufe 11,36,64 zurückgeführt.

Fig. 5 zeigt eine Alternative zu Fig. 4. Die hier dargestellte Verweilzone ist als Wirbelschicht/Fließbett 93 ausgebildet. Das aus den Zyklonen 8,34,62 abgegebene Feststoffgemisch gelangt in den Eingangsbereich des Fließbettes, wobei hier feine Teilchen pneumatisch ausgetragen werden 94. Da nur die groben Teilchen eine zusätzliche Verweilzeit im Fließbett 93 benötigen, werden diese um entsprechende Schikanen 95 geführt. Eine Wirbelschicht kann Feststoffverweilzeiten von einigen Minuten realisieren. Nach Durchlauf des Fließbettes 93 gelangen die von allen Schadstoffen befreiten Feststoffströme in den Bereich der jeweiligen Kühlstufe 11,36,64.

## Patentansprüche

1.   Verfahren zur Aufarbeitung kontaminierter Böden und ähnlicher Materialien, insbesondere von Kokereistandorten, durch Abtragung, Dekontaminierung und ggf. Wiederauffüllung der Entnahmestelle mit gereinigtem Boden, dergestalt, daß der abgetragene Boden in einer von Heißgasen durchströmten Mühle (2,29,57) getrocknet und zerkleinert, das Feststoff-/Gasgemisch einem Zyklonabscheider (4,31,58) zugeführt und dort in gasförmige und feste Bestandteile getrennt wird, daß die Feststoffe bei hoher Temperatur thermisch behandelt, anschließend abgekühlt und ggf. zur Wiederauffüllung der Entnahmestelle eingesetzt werden und daß die Abgase zumindest teilweise nach Durchführung eines Kühl- und eines Filtervorganges an die Atmosphäre abgegeben werden, dadurch gekennzeichnet, daß die festen Bestandteile im Anschluß an die Dekontamination in eine als Durchlaufbereich ausgebildete Verweilzone (9,35,63) eingebracht und dort bei Temperaturen, die im wesentlichen der Dekontaminationstemperatur enstprechen, nachbehandelt und anschließend in den Bereich der Kühlstrecke (11,36,64) übergeführt werden, und daß die Abgase aus der Mahltrocknung und-/oder der Dekontamination einer thermischen Nachverbrennung unterzogen werden.

2. Verfahren nach Anspruch 1, dadurch gekennzeichnet, daß die festen Bestandteile die Verweilzone (9,35,63) in Abhängigkeit von der Schadstoffbelastungin einem Zeitraum zwischen 5 sec. und 10 min. durchlaufen.

3. Verfahren nach Anspruch 1 und 2, dadurch gekennzeichnet, daß die Mühle (2,29,57) mit Heißgas von max. 700° C beaufschlagt und die Fraktion in Abhängigkeit von ihrer Eingansfeuchte auf etwa 100° C bis 300° C erwärmt wird, daß die festen Bestandteile im Bereich der Dekontaminationsstrecke in Abhängigkeit von der Schadstoffbelastung auf etwa 800° C bis 1100° C erwärmt und dekontaminiert werden und daß die Temperatur der Dekontaminationsstrecke im Bereich der Verweilszone im wesentlichen ohne weitere äußere Wärmezufuhr beibehalten wird.

4. Verfahren nach den Ansprüchen 1 bis 3, dadurch gekennzeichnet, daß die Abgase aus der Mahltrocknung und/oder der Dekontamination zumindest teilweise entstaubt der thermischen Nachverbrennung zugeführt werden und daß die Rauchgase aus der thermischen Nachverbrennung über einen Gaskühler geleitet und der Filtereinrichtung zugeführt werden, wobei einerseits der Filterstaub und andererseits der Staub aus der Vorabstaubung zumindest teilweise wieder in den Bereich der Dekontaminationsstrecke zurückgeführt werden.

5. Verfahren nach den Anspruch 4, dadurch gekennzeichnet, daß der nicht entstaubte Teil der Abgase aus der Mahltrocknung mit einem Teil der Rauchgase aus der thermischen Nachverbrennung vermischt und der Mühle als Heißgas (2,29,57) zur Verfügung gestellt werden.

6. Verfahren nach den Ansprüchen 1 bis 3, dadurch gekennzeichnet, daß die Abgase aus der Mahltrocknung sowie die Rauchgase aus der thermischen Nachverbrennung über einen Wärmetauscher geführt werden, daß die aufgeheizten Abgase aus der Mahltrocknung in den Bereich der Dekontaminationsstrecke geleitet und dort auf Dekontaminationstemperatur gebracht werden und daß die Rauchgase nach Durchlauf des Wärmetauschers einer Rauchgasentstaubung und in Abhängigkeit des Kontaminationsgrades der zu reinigenden Materialen einer Rauchgasentschwefelung und/oder einer Rauchgasentstickung zugeführt werden.

7. Verfahren nach Anspruch 6, dadurch gekennzeichnet, daß die Rauchgase aus der thermischen Nachverbrennung im Anschluß an den Wärmetauscherdurchlauf der Filtervorrichtung zugeführt werden, wobei der Filterstaub in den Bereich der Dekontaminationsstrecke zurückgeführt wird.

8. Verfahren nach den Ansprüchen 6 und 7, dadurch gekennzeichnet, daß die durch den Zyklonabscheider im Anschluß na die Dekontamination abgeschiedenen Abgase entstaubt und der thermischen Nachverbrennung zugeführt werden, wobei der Staub hinter der Verweilzone aufgegeben wird.

9. Verfahren nach den Ansprüchen 6 bis 8, dadurch gekennzeichnet, daß die Energiezufuhr der Mahltrocknung mit der Abluftwärme aus der Kühlvorrichtung erfolgt, wobei in Abhängigkeit von der Feuchte der zu dekontaminierenden Materialien mindestens ein weiterer Heißgaserzeuger zugeschaltet wird.

10. Verfahren nach den Ansprüchen 1 bis 9, dadurch gekennzeichnet, daß die Wärmeenergie aus der thermischen Nachverbrennung energetische, insbesondere zur Dampferzeugung, Stromerzeugung oder für Fernwärmezwecke genutzt wird.

11. Verfahren nach den Ansprüchen 1 bis 10, dadurch gekennzeichnet, daß der Energieaustrag des Wärmetauschers als Primär- bzw. Sekundärenergie dem bzw. den Brennern und/oder der Mühle zur Verfügung gestellt wird.

12. Vorrichtung zur Aufarbeitung kontaminierter Böden und ähnlicher Materialien durch Abtragung, Dekontaminierung und ggf. Wiederauffüllung der Entnahmestelle mit gereinigtem Boden, mit einer Mahl-/Trocknungseinrichtung (2,29,57), einer Einrichtung zur thermischen Behandlung der Materialen (6,32,60) mindestens einem Zyklonabscheider (4,31,58) zur Trennung des Feststoffes von der Gasphase und einer Aufheizeinrichtung, einer Kühl- und Entstaubungseinrichtung für die Abgase sowie einer Kühleinrichtung (11,36,64) für die gereinigten Materialien, gekennzeichnet durch eine als Durchlaufeinrichtung für die dekontaminierten Materialien ausgebildeten Verweilzone (9,35,63), die im Anschluß an die Dekontaminationsstrecke (6,32,60) vorgesehen ist sowie eine Einrichtung (16,42,75) zur thermischen Nachverbrennung der Abgase aus der Mahltrocknung (2,29,57) und/oder der Dekontamination (6,32,60).

13. Vorrichtung nach Anspruch 12, dadurch gekennzeichnet, daß die Verweilzone (9,35,63) durch eine mehrstufige Zyklonanordnung (85,86) gebildet ist.

14. Vorrichtung nach Anspruch 12, dadurch gekennzeichnet, daß die Verweilzone (9,35,63) durch ein Wirbelschicht/Fließbett (93) gebildet ist.

15. Vorrichtung nach Anspruch 14, gekennzeichnet durch eine Einrichtung (94) zur pneumatischen Absaugung der feinen Teilchen sowie der Abgase am Eingangsbereich des Wirbelschicht/Fließbettes (93).

16. Vorrichtung nach den Ansprüchen 12 bis 15, dadurch gekennzeichnet, daß die Einrichtung zur thermischen Nachverbrennung aus einem Brenner (16,42,75) besteht, dem ggf. ein Gaskühler (46) nachgeschaltet ist, wobei dem Brenner (16,42,75) ein Entstauber (41,74) für die Gase aus der Mahltrocknung (2,29,57) bzw. der Dekontamination (6,35,63) vorgeschaltet ist.

17. Vorrichtung nach den Ansprüchen 12 bis 15, dadurch gekennzeichnet, daß dem Zyklonabscheider (58) ein Wärmetauscher (71) nachgeschaltet ist, über den einerseits die Abgase aus der Mahltrocknung (57) und andererseits die Rauchgase aus der thermischen Nachverbrennung (75) führbar sind.

18. Vorrichtung nach den Anspruch 12, gekennzeichnet durch eine zweite Brennstoff-/Luftzuführeinrichtung (7) im Bereich der Dekontaminationsstrecke (6).

19. Vorrichtung nach den Anspruch 18, dadurch gekennzeichnet, daß das Systemgebläse (23) auf die kalte Seite hinter den Wärmetauscher (21) geschaltet ist.

20. Vorrichtung nach den Ansprüchen 12 bis 18, dadurch gekennzeichnet, daß vor der Einrichtung zur thermischen Nachverbrennung (16) eine Strahlpumpe (14) vorgesehen ist.

## Claims

1. Process for reclaiming contaminated soils and similar materials, especially from the sites of coking plants, by excavation, decontamination and optionally refilling of the extraction site with purified soil, such that the excavated soil is dried and reduced in a mill (2,29,57) through which hot gases flow, the solids/gas mixture is fed to a cyclone separator (4,31,58) and there separated into gaseous and solid constituents, that the solids are heat-treated at high temperature, then cooled and optionally used for re-filling the extraction site, and that the exhaust gases, after a cooling operation and a filtering operation have been carried out, are discharged at least in part into the atmosphere, characterised in that the solid constituents, following the decontamination, are introduced into a dwell zone (9,35,63) in the form of a run-through region and there subjected to an after-treatment at temperatures corresponding substantially to the decontamination temperature, and are then passed to the region of the cooling section (11,36,64), and that the exhaust gases from the mill drying and/or the decontamination are subjected to thermal post-combustion.

2. Process according to Claim 1, characterised in that the solid constituents pass through the dwell zone (9,35,63) within a period of between 5 secs. and 10 mins., depending on the amount of noxious substances contained therein.

3. Process according to Claim 1 and 2, characterised in that the mill (2,29,57) is provided with hot gas at 700°C maximum and the fraction is heated to approximately 100°C to 300°C, depending on its input moisture content, that the solid constituents are heated in the region of the decontamination section to approximately 800°C to 1100°C, depending on the amount of noxious substances contained therein, and are decontaminated, and that the temperature of the decontamination section is maintained in the region of the dwell zone substantially without any further external supply of heat.

4. Process according to Claims 1 to 3, characterized in that the exhaust gases from the mill drying and/or the decontamination, with the dust at least partly extracted, are fed to the thermal post-combustion and that the flue gases from the thermal post-combustion are led by way of a gas cooler and fed to the filter device, the filter dust on the one hand and the dust from the preliminary dust-extraction being returned at least in part to the region of the decontamination section again.

5. Process according to Claim 4, characterised in that the part of the exhaust gases from the mill drying from which the dust has not been extracted is mixed with part of the flue gases from the thermal post-combustion and made available to the mill as hot gas (2,29,57).

6. Process according to Claims 1 to 3, characterised in that the exhaust gases from the mill drying and also the flue gases from the thermal post-combustion are led by way of a heat exchanger, that the heated exhaust gases from the mill drying are led into the region of the decontamination section and there brought to the decontamination temperature, and that the flue gases, after passing through the heat exchanger, are fed to a means for extracting dust from the flue gases, and, depending on the degree of contamination of the materials to be purified, for removing sulphur and/or nitrogen from the flue gases.

7. Process according to Claim 6, characterised in that the flue gases from the thermal post-combustion, after passing through the heat exchanger, are fed to the filter device, the filter dust being returned to the region of the decontamination section.

8. Process according to Claims 6 and 7, characterised in that the dust is removed from the exhaust gases separated out by means of the cyclone separator following the decontamination, and fed to the thermal post-combustion, the dust being discharged behind the dwell zone.

9. Process according to Claims 6 to 8, characterised in that the energy supply to the mill drying is effected with the exhaust air heat from the cooling apparatus, at least one further hot gas producing means being switched in, depending on the moisture content of the materials being decontaminated.

10. Process according to Claims 1 to 9, characterised in that the heat energy from the thermal post-combustion is used from the energy point of view, especially for steam production, current production or for district heating purposes.

11. Process according to Claims 1 to 10, characterised in that the energy yield from the heat exchanger is made availahle as primary or secondary energy to the burner or burners and/or the mill.

12. Apparatus for reclaiming contaminated soils and similar materials by excavation, decontamination, and optionally re-filling of the extraction site with purified soil, having a mill/drying device (2,29,57), a device for the heat-treatment of the materials (6,32,60), at least one cyclone separator (4,31,58) for separating the solid material from the gas phase, and a heating device, a cooling and dust-extracting device for the exhaust gases, and also a cooling device (11,36,64) for the purified materials, characterised by a dwell zone (9,35,63) which is in the form of a run-through device for the decontaminated materials, and which is provided following the decontamination section (6,32,60) and also a device (16,42,75) for the thermal post-combustion of the exhaust gases from the mill drying (2,29,57) and/or the decontamination (6,32,60).

13. Apparatus according to Claim 12, characterised in that the dwell zone (9,35,63) is formed by a multi-stage cyclone arrangement (85,86).

14. Apparatus according to Claim 12, characterised in that the dwell zone (9,35,63) is formed by an eddy layer/-fluidised bed (93).

15. Apparatus according to Claim 14, characterised by an arrangement (94) for the pneumatic extraction of the fine particles and of the exhaust gases at the input region of the eddy layer/fluidised bed (93).

16. Apparatus according to Claims 12 to 15, characterised in that the arrangement for thermal post-combustion consists of a burner (16,42,75), downstream of which a gas cooler (46) is optionally connected, a dust-extractor (41,74) for the gases from the mill drying (2,29,57) or the decontamination (6,35,63) being connected upstream of the burner (16,42,75).

17. Apparatus according to Claims 12 to 15, characterised in that downstream of the cyclone separator (58) a heat exchanger (71) is connected by way of which the exhaust gases from the mill drying (57) on the one hand and the flue gases from the thermal post-combustion (75) on the other hand can be led.

18. Apparatus according to Claim 12, characterised by a second fuel/air infeed device (7) in the region of the decontamination section (6).

19. Apparatus according to Claim 18, characterised in that the system blower (23) is connected on the cold side behind the heat exchanger (21).

20. Apparatus according to Claims 12 to 18, characterised in that a fluid entrainment pump (14) is provided before the arrangement for thermal post-combustion (16).

## Revendications

1. Procédé pour le traitement de sols contaminés et de matériaux analogues, en particulier de sites de cokeries, par enlèvement, décontamination et, éventuellement, remblayage du lieu d'enlèvement avec du sol nettoyé, selon lequel on sèche et on fractionne le sol enlevé dans un moulin (2, 29, 57) parcouru par des gaz chauds, on envoie le mélange solide/gaz dans un séparateur à cyclone (4, 31, 58) où on le sépare en constituants gazeux et solides, on traite les solides thermiquement à haute température, on les refroidit ensuite et on les utilise éventuellement pour remblayer le lieu d'enlèvement et on rejette les gaz résiduaires en partie au moins à l'atmosphère après l'exécution d'une opération de refroidissement et d'une opération de filtrage, caractérisé en ce que, à la suite de la décontamination, on introduit les constituants solides dans une zone de séjour (9, 35, 63) réalisée comme une région de passage, où on les soumet à un traitement ultérieur à des températures correspondant essentiellement à la température de décontamination et on les transfère ensuite dans la région du trajet de refroidissement (11, 36, 63), et que l'on soumet les gaz résiduaires provenant du broyage-séchage et/ou de la décontamination à une postcombustion thermique.

2. Procédé selon la revendication 1, caractérisé en ce que les constituants solides parcourent la zone de séjour (9, 35, 63) dans un espace de temps entre 5 s et 10 min, suivant la charge en substances nuisibles.

3. Procédé selon les revendications 1 et 2, caractérisé en ce que l'on alimente le moulin (2, 29, 57) avec du gaz chaud de tout au plus 700°C et on échauffe le matériau fractionné à environ 100°C à 300°C en fonction de son humidité d'entrée, que l'on échauffe et décontamine les constituants solides dans la région du trajet de décontamination à environ 800°C à 1100°C suivant la charge en substances nuisibles, et que l'on maintient essentiellement la température du trajet de décontamination dans la région de la zone de séjour, sans apport supplémentaire de chaleur de l'extérieur.

4. Procédé selon les revendications 1 à 3, caractérisé en ce que l'on envoie les gaz résiduaires provenant du broyage/séchage et/ou de la contamination à la postcombustion thermique après au moins un dépoussiérage partiel et que l'on fait passer les gaz de fumée provenant de la postcombustion thermique à travers un refroidisseur de gaz au dispositif de filtrage, avec renvoi au moins partiel de la poussière retenue par le dispositif de filtrage d'une part et de la poussière provenant du dépoussiérage préliminaire d'autre part dans la région du trajet de décontamination.

5. Procédé selon la revendication 4, caractérisé en ce que l'on mélange la partie non dépoussiérée des gaz résiduaires provenant du broyage-séchage avec une sortie des gaz de fumée provenant de la postcombustion thermique et on met ce mélange à la disposition du moulin en tant que gaz chaud (2, 29, 57).

6. Procédé selon les revendications 1 à 3, caractérisé en ce que l'on fait passer les gaz résiduaires provenant du broyage-séchage ainsi que les gaz de fumée provenant de la postcombustion thermique à travers un échangeur de chaleur, que l'on dirige les gaz résiduaires réchauffés du broyage-séchage dans la région du trajet de contamination où on les porte à la température de décontamination et que, après qu'ils ont traversé l'échangeur de chaleur, on envoie les gaz de Fumée à un dépoussiérage de gaz de fumée et, en fonction du degré de contamination des matériaux à nettoyer, à une désulfuration de gaz de fuméee et/ou une dénitruration de gaz de fumée.

7. Procédé selon la revendication 6, caractérisé en ce que, à la suite de leur passage par l'échangeur de chaleur, on envoie les gaz de fumée provenant de la postcombustion thermique au dispositif de filtrage, avec renvoi de la poussière retenue par le dispositif de filtrage dans la région du trajet de décontamination.

8. Procédé selon les revendications 6 et 7, caractérisé en ce que l'on soumet les gaz résiduaires, séparés à la suite de la décontamination par le séparateur à cyclone, à un dépoussiérage et on les envoie ensuite à la postcombustion thermique, avec introduction de la poussière derrière la zone de séjour.

9. Procédé selon les revendications 6 à 8, caractérisé en ce que l'on alimente le broyage-séchage en énergie par de l'air chaud sortant du dispositif de refroidissement, avec adjonction éventuelle d'au moins un générateur de gaz chaud supplémentaire en fonction de l'humidité des matériaux à décontaminer.

10. Procédé selon les revendications 1 à 9, caractérisé en ce que l'on utilise l'énergie calorifique de la postcombustion thermique à des fins énergétiques, en particulier pour la génération de vapeur, la production de courant électrique ou à des fins de chauffage à distance.

11. Procédé selon les revendications 1 à 10, caractérisé en ce que l'on met l'énergie fournie par l'échangeur de chaleur à la disposition du ou des bruleur(s) et/ou du moulin en tant qu'énergie primaire ou secondaire.

12. Installation pour le traitement de sols contaminés et de matériaux analogues, par enlèvement, décontamination et, éventuellement, remblayage du lieu d'enlèvement avec du sol nettoyé, comprenant un dispositif de broyage/séchage (2, 29, 57), un dispositif pour le traitement thermique des matériaux (6, 32, 60), au moins un séparateur à cyclone (4, 31, 58) pour séparer la matière solide de la phase gazeuse et un dispositif de réchauffage, un dispositif de refroidissement et de dépoussiérage pour les gaz résiduaires ainsi qu'un dispositif de refroidissement (11, 36, 64) pour les matériaux nettoyés, caractérisée par une zone de séjour (9, 35, 63) réalisée comme un dispositif de passage pour les matériaux décontaminés, qui est prévue à la suite du trajet de décontamination (6, 32, 60), ainsi que par un dispositif (16, 42, 75) pour la postcombustion thermique des gaz résiduaires provenant du broyage-séchage (2, 29, 57) et/ou de la décontamination (6, 32, 60).

13. Installation selon la revendication 12, caractérisée en ce que la zone de séjour (9, 35, 63) est formée par un dispositif à cyclones (85, 86) à plusieurs étages.

14. Installation selon la revendication 12, caractérisée en ce que la zone de séjour (9, 35, 63) est formée par une couche turbulente/lit fluidisé (93).

15. Installation selon la revendication 14, caractérisée par un dispositif (94) pour l'évacuation pneumatique par aspiration des particules fines ainsi que des gaz résiduaires sur la région d'entrée de la couche turbulente/lit fluidisé (93).

16. Installation selon les revendications 12 à 15, caractérisée en ce que le dispositif de postcombustion thermique est constitué d'un brûleur (16, 42, 75) suivi éventuellement d'un refroidisseur de gaz (46), le brûleur (16, 42, 75) étant précédé d'un dépoussiéreur (41, 74) pour les gaz provenant du broyage-séchage (2, 29, 57) ou de la décontamination (6, 35, 63).

17. Installation selon les revendications 12 à 15, caractérisée en ce que le séparateur à cyclone (58) est suivi d'un échangeur de chaleur (71) par lequel on peut faire passer d'une part les gaz résiduaires du broyage-séchage (57) et d'autre part les gaz de fumée provenant de la postcombustion thermique (75).

18. Installation selon la revendication 12, caractérisée par un second dispositif d'amenée de combustible/air (7) dans la région du trajet de décontamination (6).

19. Installation selon la revendication 18, caractérisée en ce que la soufflante du système (23) est montée sur le côté froid derrière l'échangeur de chaleur (21).

20. Installation selon les revendications 12 à 18, caractérisée en ce qu'une pompe à jet (14) est prévue avant le dispositif de postcombustion thermique (16).

Fig. 1

Fig. 2

EP 0 442 902 B1

13

Fig. 3

Fig. 4

Fig. 5